# EUROPÄISCHE PATENTSCHRIFT

(11) **EP 0 416 552 B1**
(45) Veröffentlichungstag und Bekanntmachung des Hinweises auf die Patenterteilung: **09.06.1993**
(21) Anmeldenummer: 90117002.7
(22) Anmeldetag: 04.09.1990
(51) Int. Cl.: B23B 43/00, B23Q 37/00

(54) **Vertikalspindelständer**
Vertical spindle head
Broche à montant

(30) Priorität: 06.09.1989 DE 3929657
(43) Veröffentlichungstag der Anmeldung: 13.03.1991
(73) Patentinhaber: EMCO MAIER GESELLSCHAFT M.B.H., A-5400 Hallein (AT)
(72) Erfinder: Enzinger, Kurt, A-5730 Mittersill (AT)
(74) Vertreter: Schaumburg, Thoenes & Thurn

(56) Entgegenhaltungen:
- EP-A- 0 117 973
- EP-A- 0 142 976
- AT-A- 134 803
- AT-B- 189 886
- DD-A- 274 994
- DE-A- 2 553 805
- DE-A- 3 700 816
- DE-C- 830 248

## Beschreibung

Die vorliegende Erfindung betrifft einen Vertikalspindelständer der im Oberbegriff des Anspruches 1 genannten Art.

In kleineren Werkstätten werden vielfach Drehmaschinen eingesetzt, die durch Anmontieren eines Vertikalspindelständers zu einer Vertikalbohr- und Fräsmaschine ergänzt werden können. Dadurch wird die Universalität derartiger Maschinen beträchtlich erhöht, so daß sie insbesondere außerhalb des Produktionsbetriebes für Sonderbearbeitungsaufgaben eingesetzt werden können.

Da derartige Vertikalspindelständer vor allem in Verbindung mit kleineren Drehmaschinen der unteren Preisklasse Verwendung finden, ist es wesentlich, daß auch der Vertikalspindelständer konstruktiv einfach und damit preiswert ist. Um die Universalität der Gesamtmaschine optimal nutzen zu können, ist es weiter wichtig, daß der Vertikalspindelständer leicht und ohne großen Zeitaufwand montiert und demontiert werden kann.

Es ist deshalb die Aufgabe der vorliegenden Erfindung, einen Vertikalspindelständer der im Oberbegriff des Anspruches 1 genannten Art zu schaffen, welcher einfach im Aufbau und damit preisgünstig ist und der sich einfach und schnell montieren bzw. demontieren läßt.

Diese Aufgabe ist erfindungsgemäß durch die im Kennzeichen des Anspruches 1 enthaltenen Merkmale gelöst.

Der Vertikalspindelständer umfaßt eine hohle Vertikalsäule, auf welcher ein Spindelgehäuse vertikal verschiebbar gelagert ist; um das Gewicht des Spindelgehäuses mit allen Einbauten auszugleichen, ist am Spindelgehäuse ein Zugband oder dergleichen befestigt, welches über eine am oberen Ende der Vertikalsäule befestigte Umlenkrolle geführt und dessen freies Ende mit einer im Inneren der Vertikalsäule angeordneten und verankerten Zugfeder verbunden ist. Diese Zugfeder ist im Inneren der Vertikalsäule geschützt und in ästhetisch ansprechender Weise untergebracht. Das dem Zugband abgewandte Ende der Zugfeder ist in der Vertikalsäule selbst verankert, d.h. die Zugfeder muß nicht bei der Montage des Vertikalspindelständers am Maschinenbett eingehängt bzw. zum Demontieren des Vertikalspindelständers ausgehängt werden. Die Mittel zur vertikalen Verstellung des Spindelgehäuses entlang der Vertikalsäule stützen sich an der Vertikalsäule selbst ab, so daß auch hier keine Verbindung zum übrigen Teil der Drehmaschine geschaffen werden muß; der gesamte Vertikalspindelständer ist ein in sich geschlossenes System, welches als ganzes am Maschinenbett der Drehmaschine montiert wird und damit sofort einsatzbereit ist.

Die Vertikalsäule ist vorzugsweise rohrförmig ausgebildet, so daß sie in einfacher Weise als Drehteil herstellbar ist.

Die Mittel zur vertikalen Verstellung des Spindelgehäuses umfassen erfindungsgemäß eine Drehantreibbare Leitspindel, die am oberen Ende der Vertikalsäule drehbar und axial unverschiebbar gelagert ist und die mit einer im Spindelgehäuse fest angeordneten Spindelmutter zusammenwirkt. Diese Vertikalleitspindel ermöglicht ein feinfühliges und genaues Verstellen des Spindelgehäuses mit der darin gelagerten Spindel.

Zusätzlich kann eine an der Vertikalsäule befestigte vertikale Zahnstange vorgesehen sein, welche mit einem im Spindelgehäuse drehantreibbar gelagerten Zahnritzel zusammenwirkt. Das Zahnritzel kann beispielsweise über einen Schwenkhebel in bei Vertikalbohrmaschinen bekannter Weise betätigbar sein.

Das Spindelgehäuse ist in bevorzugter Ausgestaltung der Erfindung ein Abschnitt eines Stranggußteils mit einer in Richtung der Vertikalsäule verlaufenden Strangachse, wobei das Spindelgehäuse von mehreren in Richtung der Strangachse verlaufenden Durchgangsöffnungen durchsetzt ist. Eine der Durchgangsöffnungen hat eine der Außenkontur der Vertikalsäule angepaßte Innenkontur und dient zur Führung des Spindelgehäuses auf der Vertikalsäule.

Eine andere der Durchgangsöffnungen ist für die Aufnahme der Vertikalspindel ausgebildet. In einer weiteren Durchgangsöffnung ist der Antriebsmotor für die Vertikalspindel angeordnet. In einer vierten Durchgangsöffnung ist die Spindelmutter für die Vertikalleitspindel fest angeordnet. Da es sich um eine Durchgangsöffnung handelt, kann die Vertikalleitspindel diese ganz durchsetzen, d.h. die Vertikalleitspindel und damit der vertikale Verstellweg des Spindelgehäuses kann größer sein als die Höhe dieses Spindelgehäuses.

Die Vertikalleitspindel ist vorzugsweise mit einem Handrad versehen, das mit einem an einem zugeordneten, an der Vertikalsäule fest montierten Stellmotor ankuppelbaren Getrieberad fest verbunden ist. Auf diese Weise kann der Vorschubantrieb für die vertikale Verstellung des Spindelgehäuses und der darin gelagerten Spindel wahlweise manuell oder motorisch durchgeführt werden.

In bevorzugter Ausgestaltung der Erfindung ist das Getrieberad mit dem Handrad einstückig ausgebildet, so daß es zum Beispiel in einfacher Weise als Präzisionsspritzteil hergestellt werden kann.

Eine besonders einfache konstruktive Ausführung ergibt sich dann, wenn das Getrieberad als Zahnriemenscheibe ausgebildet ist, die über einen Zahnriemen mit einem entsprechenden, auf der Ausgangswelle des Antriebsmotors befestigten Zahnrad verbunden wird. Ein Zahnriemen läßt sich in einfacher Weise auch mit Werkstattmitteln und von Bedienungspersonen ohne spezielle Monteurausbildung schnell montieren bzw. demontieren. Damit besteht die Möglichkeit, den Antriebsmotor für den Fall, daß ein manueller Vorschubantrieb vorgesehen ist, von dem Handrad zu trennen, so daß dann der Antriebsmotor nicht mitbewegt zu werden braucht.

Ein Ausführungsbeispiel der Erfindung ist in der Zeichnung dargestellt und im folgenden näher beschrieben. Es zeigen:
- Figur 1: eine Drehmaschine mit am Maschinenbett anmontiertem Vertikalspindelständer;
- Figur 2: einen Vertikalspindelständer gemäß Figur 1 in vergrößertem Maßstab;
- Figur 3: einen Vertikalspindelständer gemäß Figur 2 in einer Seitenansicht;
- Figur 4: einen Vertikalspindelständer gemäß Figur 1 in einer Draufsicht.

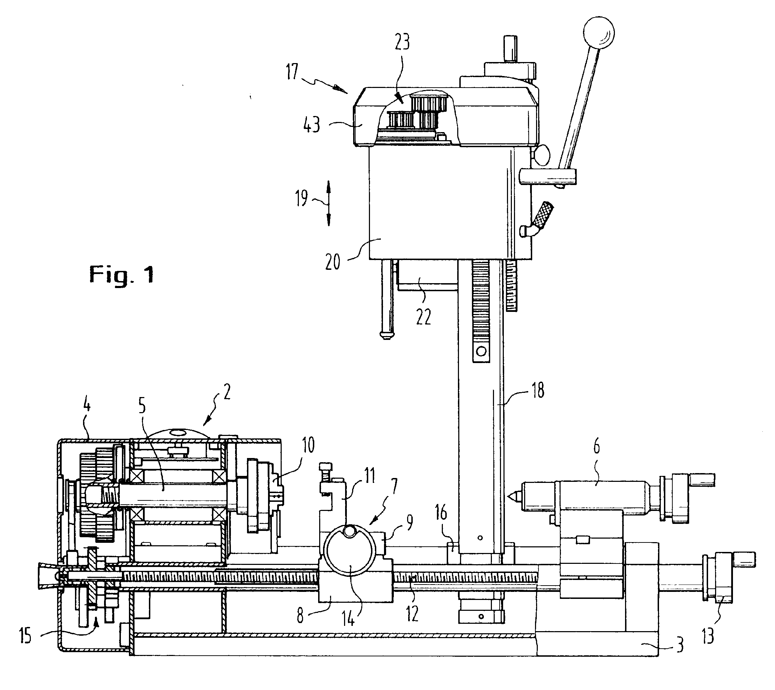

Figur 1 zeigt eine Drehmaschine 2 mit einem Maschinenbett 3, einem darauf fest angeordneten Hauptspindelstock 4 mit einer motorgetriebenen Hauptspindel 5, ferner mit einem in Richtung der Hauptspindelachse verschiebbar angeordneten Reitstock 6 und einem Kreuztisch 7, welcher in an sich bekannter Weise einen in Richtung der Hauptspindelachse längsverschiebbaren Längstisch 8 und einen auf diesem quer dazu verfahrbaren Quertisch 9 umfaßt. Ein Werkstück, an welchem eine Drehbearbeitung durchgeführt werden soll, wird in das Spannfutter 10 der Hauptspindel 5 eingespannt und gegebenenfalls an seinem freien Ende durch die Reitspindel des Reitstokkes 6 abgestützt. In einem am Quertisch 9 befestigten Werkzeughalter 11 wird ein Werkzeug, beispielsweise ein Drehstab, eingespannt.

Für die Verstellung des Längstisches 8 ist eine Längsleitspindel 12 mit einem Außengewinde drehbar und in axialer Richtung 5 unverschiebbar im Maschinenbett 3 gelagert und über ein mit dieser drehfest verbundenes Handrad 13 verdrehbar. Die mit einem Außengewinde versehene Längsleitspindel 12 wirkt mit einer im Längstisch 8 fest angeordneten Spindelmutter zusammen.

Zur Verstellung des Quertisches 9 ist im Längstisch 8 eine Querleitspindel drehbar und axial unverschiebbar gelagert, die mittels eines an dieser Querleitspindel drehfest angeordneten Handrades 14 verdrehbar ist. Die mit einem Außengewinde versehene Querleitspindel wirkt mit einer im Querschlitten 9 fest angeordneten Spindelmutter zusammen.

Um Spiraldreharbeiten durchführen zu können, kann die Längsleitspindel 12 über eine an ihrem dem Handrad 13 abgewandten Ende angeordnete Getriebe- und Kupplungseinrichtung 15 mit der Hauptspindel 5 bzw. dem Hauptspindelantrieb gekuppelt werden, wobei unterschiedliche Übersetzungsverhältnisse zur Erzielung unterschiedlicher Spiralsteigungen einstellbar sind.

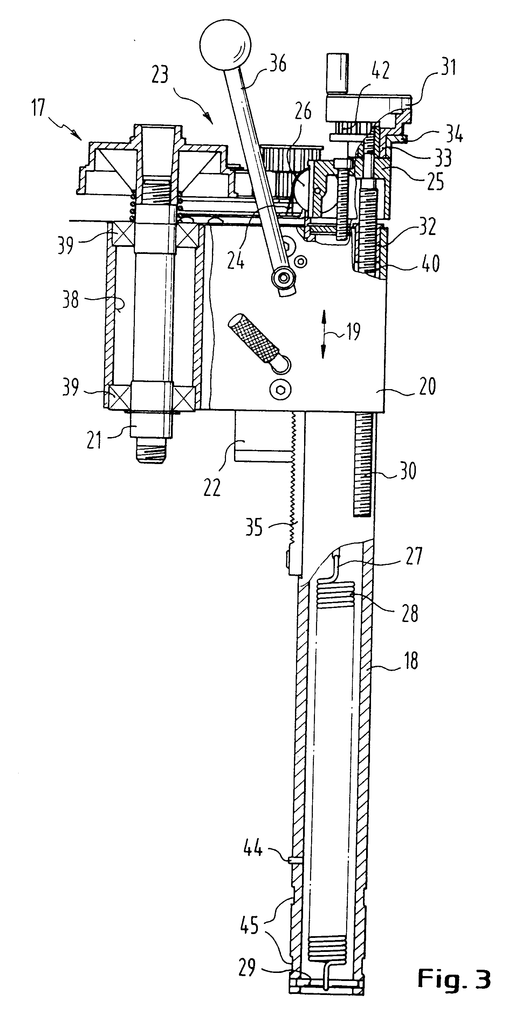

In einen Aufnahmebeschlag 16 des Maschinenbettes 3 ist ein Vertikalspindelständer 17 einsetzbar. Der Vertikalspindelständer 17 umfaßt im wesentlichen eine Vertikalsäule 18, ein auf der Vertikalsäule 18 in vertikaler Richtung (Doppelpfeil 19) verschiebbares Spindelgehäuse 20 und eine in dem Spindelgehäuse 20 angeordnete, mit einem Drehantrieb gekoppelte Vertikal-spindel 21 (siehe Figur 3). Die Vertikalspindel 21, der Spindelantriebsmotor 22 und das als Riemenscheibentrieb ausgebildete Übertragungsgetriebe 23 sind fest mit dem Spindelgehäuse 20 verbunden und bewegen sich mit diesem auf und ab.

Um einen Gewichtsausgleich für das Spindelgehäuse 20 mit allen Einbauten zu schaffen, ist am Spindelgehäuse 20 ein Zugband 24 befestigt, welches über eine Umlenkrolle 26 geführt ist, die in einem am oberen Ende der Vertikalsäule 18 angeordneten Lagerbock 25 gelagert ist, wobei das freie Ende 27 des Zugbandes 24 mit einer im Inneren der hohlen, rohrförmigen Vertikalsäule 18 angeordneten Zugfeder 28 verbunden ist, deren unteres Ende in der Vertikalsäule 18 über Verankerungsmittel 29 verankert ist.

Die Mittel zur vertikalen Verstellung des Spindelgehäuses 20 umfassen eine im Lagerbock 25 drehbar und axial unverschiebbar gelagerte Vertikalleitspindel 30, an deren oberem Ende ein Handrad 31 befestigt ist. Die Vertikalleitspindel 30 ist mit einem Außengewinde versehen, welches mit dem Innengewinde einer im Spindelgehäuse 20 fest angeordneten Spindelmutter 32 zusammenwirkt, so daß durch Verdrehen der Vertikal-leitspindel 30 das Spindelgehäuse 20 in Richtung des Doppelpfeiles 19 vertikal verstellt werden kann.

Auf einem nabenartigen Fortsatz 33 des Handrades 31 ist ein Skalenring 34 reibschlüssig gelagert, wobei eine auf dem Skalenring 34 ausgebildete Skalenmarkierung mit einer z.B. am Lagerbock 25 oder an einem anderen maschinenfesten Bauteil angeordneten Gegenmarkierung zusammenwirkt, so daß eine Feinverstellung des Spindelgehäuses 20 möglich ist.

Zur Grobverstellung des Spindelgehäuses 20 ist zusätzlich eine Verstelleinrichtung vorgesehen, die im wesentlichen eine an der Vertikalsäule 18 befestigte Zahnstange 35 umfaßt, die mit einem im Spindelgehäuse 20 drehbar gelagerten und über den Handhebel 36 betätigbaren Zahnritzel zusammenwirkt, wie an sich bekannt und deshalb nicht näher dargestellt wurde. Diese Verstelleinrichtung dient im wesentlichen zur Vertikalverstellung der Vertikalspindel beim Bohrbetrieb.

Das Spindelgehäuse 20 ist ein Abschnitt eines Stranggußteils mit einer in Richtung der Vertikalsäule verlaufenden Strangachse; es ist von mehreren in Richtung der Strangachse verlaufenden Durchgangsöffnungen durchsetzt, die zur Aufnahme der unterschiedlichen, im Spindelgehäuse 20 angeordneten Aggregate sowie zur Verschiebelagerung auf der Vertikalsäule 18 dienen.

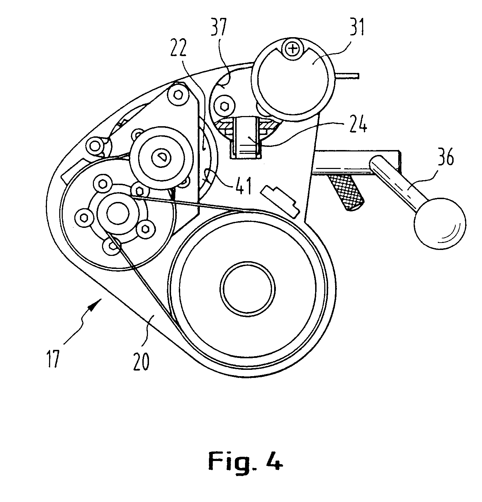

Eine erste Durchgangsöffnung 37 hat im Querschnitt (siehe Figur 4) dementsprechend eine der Außenkontur der Vertikalsäule 18 angepaßte Innenkontur, wobei die Außenkontur der Vertikalsäule 18 auch die Zahnstange 35 mitumfaßt. Die Durchgangsöffnung 37 kann beim Stranggießen des Spindelgehäuses 20 schon mit großer Genauigkeit hergestellt sein. Die Fertigbearbeitung kann in einfacher Weise durch Drehen und Stoßen erfolgen.

Eine zweite Durchgangsöffnung 38 (siehe Figur 3) dient zur Aufnahme der Vertikalspindel 21 bzw. der Spindellager 39.

Eine dritte Durchgangsöffnung 40 nimmt die Spindelmutter 32 auf sowie die Vertikalleitspindel 30, die diese Durchgangsöffnung 40 auf ihrer ganzen Länge durchsetzen kann.

Eine vierte Durchgangsöffnung 41 dient zur Aufnahme des Spindelantriebsmotors 22.

Wie insbesondere Figur 3 zeigt, ist am Handrad 31 der Vertikalleitspindel 30 ein als Zahnriemenscheibe 42 dienender Abschnitt ausgebildet, welcher über einen Zahnriemen mit einem Stellmotor verbunden werden kann, welcher beispielsweise mit dem Lagerbock 25 fest verbunden wird. Auf diese Weise ist eine motorische Verstellung des Spindelgehäuses 20 möglich. Der Stellmotor kann mit einer NC-Steuerung verbunden sein, so daß der Betrieb des Vertikalspindelständers 17 automatisierbar ist.

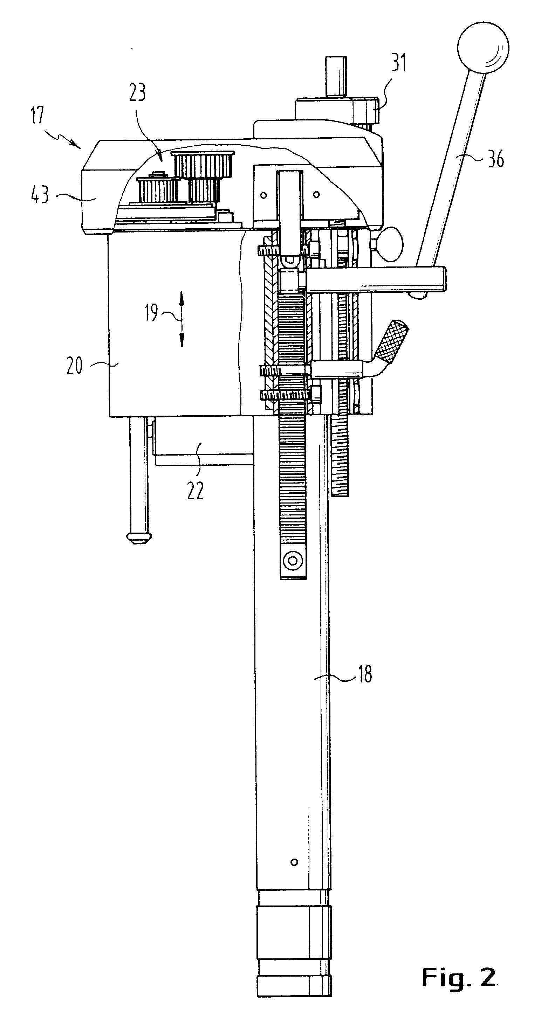

Wie die Figuren 1 und 2 zeigen, kann die Oberseite des Spindelgehäuses 21 durch einen Deckel 43 abgedeckt werden, aus welchem im wesentlichen nur das Handrad 31 herausragt.

Die Vertikalsäule 18 ist in ihrem untere Bereich mit einem Anschlagstift 44 versehen, welcher sich bei der Montage des Vertikalspindelständers 17 auf eine Gegenfläche des Aufnahmebeschlages 16 auflegt und damit die Einstecktiefe der Vertikalsäule 18 im Aufnahmebeschlag 16 definiert. Außerdem sind im Bereich des unteren Endes der Vertikalsäule 18 zwei Umfangsnuten 45 ausgebildet, in die nicht dargestellte Fixierschrauben für eine axiale Fixierung des Vertikalspindelständers 17 eingreifen können.

## Patentansprüche

1. Vertikalspindelständer, insbesondere zum Anbau an eine Drehmaschine, wobei der Vertikalspindelständer eine Vertikalsäule und eine daran vertikal verstellbar angeordnete motorangetriebene Vertikalspindel umfaßt, dadurch **gekennzeichnet**, daß die Vertikalsäule (18) eine Hohlsäule ist, auf welcher ein Spindelgehäuse (20) vertikal verschiebbar gelagert ist, daß am Spindelgehäuse (20) ein Zugband (24) oder dgl. befestigt ist, welches über eine am oberen Ende der Vertikalsäule (18) befestigte Umlenkrolle geführt und dessen freies Ende mit einer im Inneren der hohlen Vertikalsäule (18) angeordneten und verankerten Zugfeder (28) verbunden ist, und daß an der Vertikalsäule sich abstützende Mittel zur vertikalen Verstellung des Spindelgehäuses (20) entlang der Vertikalsäule (18) vorgesehen sind.

2. Vertikalspindelständer nach Anspruch 1, dadurch **gekennzeichnet**, daß die Vertikalsäule (18) rohrförmig ist.

3. Vertikalspindelständer nach Anspruch 1 oder 2, dadurch **gekennzeichnet**, daß die Mittel zur vertikalen Verstellung des Spindelgehäuses (20) eine drehantreibbare Vertikalleitspindel (30) umfassen, die am oberen Ende der Vertikalsäule (18) drehbar und axial unverschiebbar gelagert ist und die mit einer im Spindelgehäuse (20) fest angeordneten Spindelmutter (32) zusammenwirkt.

4. Vertikalspindelständer nach einem der Ansprüche 1 bis 3, dadurch **gekennzeichnet**, daß die Mittel zur vertikalen Verstellung des Spindelgehäuses (20) eine an der Vertikalsäule (18) befestigte vertikale Zahnstange (35) umfassen, welche mit einem im Spindelgehäuse (20) drehantreibbar gelagerten Zahnritzel zusammenwirkt.

5. Vertikalspindelständer nach einem der Ansprüche 1 bis 4, dadurch **gekennzeichnet**, daß das Spindelgehäuse (20) ein Abschnitt eines Stranggußteils mit einer in Richtung der Vertikalsäule (18) verlaufenden Strangachse ist, wobei das Spindelgehäuse (20) von mehreren in Richtung der Strangachse verlaufenden Durchgangsöffnungen (37, 38, 40, 41) durchsetzt ist.

6. Vertikalspindelständer nach Anspruch 5, dadurch **gekennzeichnet**, daß eine (37) der Durchgangsöffnungen im Querschnitt eine der Außenkontur der Vertikalsäule (18) angepaßte Innenkontur hat.

7. Vertikalspindelständer nach Anspruch 5 oder 6, dadurch **gekennzeichnet**, daß eine (38) der Durchgangsöffnungen für die Aufnahme der Vertikalspindel (21) ausgebildet ist.

8. Vertikalspindelständer nach einem der Ansprüche 5 bis 7, dadurch **gekennzeichnet**, daß eine (41) der Durchgangsöffnungen für die Aufnahme eines Antriebsmotors (22) für die Vertikalspindel (21) ausgebildet ist.

9. Vertikalspindelständer nach einem der Ansprüche 5 bis 8, dadurch **gekennzeichnet**, daß eine (40) der Durchgangsöffnungen für die Aufnahme der Spindelmutter (32) und für den Durchtritt der Vertikalleitspindel (30) ausgebildet ist.

10. Vertikalspindelständer nach einem der Ansprüche 3 bis 9, dadurch **gekennzeichnet**, daß die Vertikalleitspindel (30) mit einem Handrad (31) versehen ist, welches mit einem an einen zugeordneten, am Vertikalspindelständer (17) fest montierten Stellmotor ankuppelbaren Getrieberad (42) fest verbunden ist.

11. Vertikalspindelständer nach Anspruch 10, dadurch **gekennzeichnet**, daß das Getrieberad (42) mit dem Handrad (31) einstückig ausgebildet ist.

12. Vertikalspindelständer nach den Ansprüche 10 oder 11, dadurch **gekennzeichnet**, daß das Getrieberad (42) als Zahnriemenscheibe ausgebildet ist.

## Claims

1. A vertical spindle head, more particularly for attachment to a lathe, the vertical spindle head comprising a vertical column with a motor-driven vertical spindle disposed for vertical adjustment thereon, characterised in that the vertical column (18) is a hollow column on which a spindle housing (20) is mounted for vertical displacement, in that a tension belt (24) or the like is secured to the spindle housing (20) and is trained over a reversing roller secured to the top end of the vertical column (18), while its free end is connected to a tension spring (28) disposed and anchored inside the hollow vertical column (18), and in that means bearing against the vertical column are provided for vertical adjustment of the spindle housing (20) along the vertical column (18).

2. A vertical spindle head according to claim 1, characterised in that the vertical column (18) is tubular.

3. A vertical spindle head according to claim 1 or 2, characterised in that the means for vertical adjustment of the spindle housing (20) comprise a vertical leadscrew (30), which is drivable in rotation and which is mounted to be rotatable and axially non-displaceable at the top end of the vertical column (18) and which co-operates with a feed screw nut (32) fixed in the spindle housing (20).

4. A vertical spindle head according to any one of claims 1 to 3, characterised in that the means for vertical adjustment of the spindle housing (20) comprise a vertical rack (35) which is secured to the vertical column (18) and which co-operates with a pinion mounted to be drivable in rotation in the spindle housing (20).

5. A vertical spindle head according to any one of claims 1 to 4, characterised in that the spindle housing (20) is part of a continuous casting whose casting axis extends in the direction of the vertical column (18), the spindle housing (20) being formed with a number of passage apertures (37, 38, 40, 41) extending in the direction of the casting axis.

6. A vertical spindle head according to claim 5, characterised in that one (37) of the passage apertures has in cross-section an internal contour matching the external contour of the vertical column (18).

7. A vertical spindle head according to claim 5 or 6, characterised in that one (38) of the passage apertures is constructed to receive the vertical spindle (21).

8. A vertical spindle head according to any one of claims 5 to 7, characterised in that one (41) of the passage apertures is adapted to receive a drive motor (22) for the vertical spindle (21).

9. A vertical spindle head according to any one of claims 5 to 8, characterised in that one (40) of the passage apertures is adapted to receive the feed screw nut (32) and for the passage of the vertical spindle (30).

10. A vertical spindle head according to any one of claims 3 to 9, characterised in that the vertical leadscrew (30) is provided with a handwheel (31) rigidly connected to a gearwheel (42) adapted to be coupled to a servomotor fixed on the vertical spindle head (17).

11. A vertical spindle head according to claim 10, characterised in that the gearwheel (42) is made in one piece with the handwheel (31).

12. A vertical spindle head according to claims 10 and 11, characterised in that the gearwheel (42) is constructed as a toothed belt pulley.

## Revendications

1. Montant à broche verticale, notamment pour montage sur un tour, ce montant comportant une colonne verticale et, agencée avec possibilité de déplacement vertical sur celle-ci , une broche verticale entraînée par moteur, caractérisé par le fait que la colonne verticale (18) est une colonne creuse sur laquelle un carter de broche (20) est monté avec possibilité de translation verticale ; par le fait qu'au carter de broche (20) est fixée une bande de traction (24) ou analogue qui passe par-dessus une poulie de changement de direction fixée à l'extrémité supérieure de la colonne verticale (18), l'extrémité libre de cette bande étant reliée à un ressort de traction (28) agencé et fixé à l'intérieur de la colonne verticale creuse (18) ; et par le fait qu'il est prévu des moyens pour déplacer verticalement le carter de broche (20) le long de la colonne verticale (18), lesquels s'appuient sur la colonne verticale.

2. Montant à broche verticale selon la revendication 1, caractérisé par le fait que la colonne verticale (18) est tubulaire.

3. Montant à broche verticale selon la revendication 1 ou 2, caractérisé par le fait que les moyens pour déplacer verticalement le carter de broche (20) comportent une vis-mère verticale (30) pouvant être entraînée en rotation, qui est montée à rotation, sans possibilité de déplacement axial, à l'extrémité supérieure de la colonne verticale (18) et coopère avec un écrou de broche (32) agencé fixe dans le carter de broche (20).

4. Montant à broche verticale selon l'une des revendications 1 à 3, caractérisé par le fait que les moyens pour déplacer verticalement le carter de broche (20) comportent une crémaillère verticale (35) qui est fixée à la colonne verticale (18) et coopère avec un pignon monté avec possibilité d'entraînement en rotation dans le carter de broche (20).

5. Montant à broche verticale selon l'une des revendications 1 à 4, caractérisé par le fait que le carter de broche (20) est une portion d'une pièce coulée ou filée en continu, dont l'axe de filage s'étend dans la direction de la colonne verticale (18), le carter de broche (20) étant traversé par plusieurs ouvertures de passage (37, 38, 40, 41) s'étendant en direction de l'axe de filage.

6. Montant à broche verticale selon la revendication 5, caractérisé par le fait que l'une (37) des ouvertures de passage présente, en coupe transversale, un contour intérieur adapté au contour extérieur de la colonne verticale (18).

7. Montant à broche verticale selon la revendication 5 ou 6, caractérisé par le fait que l'une (38) des ouvertures de passage est configurée pour recevoir la broche verticale (21).

8. Montant à broche verticale selon l'une des revendications 5 à 7, caractérisé par le fait que l'une (41) des ouvertures de passage est configurée pour recevoir un moteur (22) pour entraîner la broche verticale (21).

9. Montant à broche verticale selon l'une des revendications 5 à 8, caractérisé par le fait que l'une (40) des ouvertures de passage est configurée pour la réception de l'écrou de broche (32) et pour la traversée de la vis-mère verticale (30).

10. Montant à broche verticale selon l'une des revendications 3 à 9, caractérisé par le fait que la vis-mère verticale (30) est munie d'un volant à main (31) qui est solidarisé à une roue de transmission (42) pouvant être couplée à un moteur-positionneur conjugué, monté fixe sur le montant (17).

11. Montant à broche verticale selon la revendication 10, caractérisé par le fait que la roue de transmission (42) est réalisée en une seule pièce avec le volant à main (31).

12. Montant à broche verticale selon la revendication 10 ou 11, caractérisé par le fait que la roue de transmission (42) est réalisée sous la forme d'une poulie pour courroie crantée.
